**Europäisches Patentamt**

**European Patent Office**

**Office européen des brevets**

(19)

(11) Veröffentlichungsnummer : **0 181 382 B1**

(12) **EUROPÄISCHE PATENTSCHRIFT**

(45) Veröffentlichungstag der Patentschrift :
15.03.89

(51) Int. Cl.⁴ : **G 03 B 21/16**

(21) Anmeldenummer : **85902457.2**

(22) Anmeldetag : **13.05.85**

(86) Internationale Anmeldenummer :
**PCT/DE 85/00161**

(87) Internationale Veröffentlichungsnummer :
**WO/8505468 (05.12.85 Gazette 85/26)**

(54) **MAGAZIN-STEHBILDWERFER.**

(30) Priorität : **15.05.84 DE 8414779 U**

(43) Veröffentlichungstag der Anmeldung :
**21.05.86 Patentblatt 86/21**

(45) Bekanntmachung des Hinweises auf die Patenterteilung : **15.03.89 Patentblatt 89/11**

(84) Benannte Vertragsstaaten :
**BE DE FR GB IT**

(56) Entgegenhaltungen :
**DE–A– 2 237 468**
**DE–A– 2 600 265**
**DE–B– 1 091 427**
**DE–C– 862 555**

(73) Patentinhaber : **Dieckhöner, Bernd**
**Buchhorstblick 14**
**D-3302 Cremlingen (DE)**

(72) Erfinder : **DIECKHÖNER, Bernd**
**Buchhorstblick 14**
**D-3302 Cremlingen (DE)**

(74) Vertreter : **Lins, Edgar, Dipl.-Phys. et al**
**Patentanwälte Gramm + Lins Theodor-Heuss-**
**Strasse 2**
**D-3300 Braunschweig (DE)**

**Beschreibung**

Die Erfindung betrifft einen Magazin-Stehbildwerfer mit einem eine metallische Bodenplatte aufweisenden Gehäuse mit einer Ansaugöffnung, von der aus ein Kühllüfter einen Ansaugluftstrom über eine Lichtquelle und ein Bildfenster erzeugt, und mit einem Netztransformator mit einem Transformatormantel und einem Kernfenster. Bei diesen Projektoren richtet sich das Augenmerk in erster Linie auf die Verhinderung einer unzulässigen Erhitzung der Dias im Bildfenster. Hierzu sind regelmäßig zwischen der Lichtquelle und dem Bildfenster Wärmeschutzfilter eingefügt. Notwendig ist die Kühlung der Lichtquelle selbst, da die wegen ihrer günstigen Lichtausbeute häufig verwendeten Niedervolt-Halogenlampen eine große Hitze entwickeln, so daß sie bei längerem Betrieb ohne Kühlung zerstört werden würden. Bei den übrigen Stromverbrauchern hat es der Konstrukteur in der Hand, sie entsprechend ihrer Betriebsweise (Dauerbetrieb oder intermittierender Betrieb) so zu bemessen, daß ihre vorgegebene oder gewünschte Betriebstemperatur nicht überschritten wird. Das gilt an sich auch für den für die Niedervolt-Stromversorgung des Bildwerfers erforderlichen Netztransformator. Auch hier kann durch eine niedrige spezifische Strombelastung der Wicklungen, d. h. kleineren Stromdichten in den Wicklungen, in Verbindung mit einer Verminderung der Flußdichte im Eisenkern des Transformators die Betriebserwärmung in Grenzen gehalten werden. Dabei ergeben sich allerdings so große Abmessungen und Gewichte des Transformators, daß die leichte Handhabbarkeit und Transportierbarkeit des Bildwerfers in Frage gestellt ist, weil das Transformatorgewicht leicht die Hälfte des Gesamtgewichts des Bildwerfers ausmachen kann.

In der DE-A-22 37 468 ist ein Unterdrucksystem für einen Magazin-Stehbildwerfer erwähnt, das die Ansaugung von Luft durch beliebig positionierte Ansaugschlitze zur Kühlung aller möglichen Projektorteile, u. a. des Transormators, ermöglicht.

In der DE-A-26 00 265 ist ein Gehäuse für einen Laufbildprojektor offenbart, das eine Mehrzahl von Ansaugschlitzen aufweist, hinter denen verschiedene elektrische Bauteile, u. a. ein Transformator, angeordnet sind. Ein axial ansaugender Radiallüfter leitet die angesaugte Luft unter Druck durch eine Ausgangsöffnung gegen die Projektions-Lichtquelle. Eine Ansaugöffnung des Gehäuses ist vom Lüfter aus gesehen jenseits eines mit seiner Kernfensterebene senkrecht auf dem Chassis stehenden Transformators angeordnet, so daß ein Teilluftstrom auch durch das Kernfenster des Transformators entsteht.

Der Erfindung liegt die Aufgabe zugrunde, ohne nennenswerten Mehraufwand für das Kühlsystem und ohne eine nennenswerte Beeinträchtigung des Transformator-Wirkungsgrades eine Verkleinerung und damit Verbilligung und Gewichtseinsparung, des Transformators zu ermöglichen.

Diese Aufgabe wird erfindungsgemäß bei einem Magazin-Stehbildwerfer der eingangs erwähnten Art dadurch gelöst, daß die Ansaugöffnung mit einem dickwandigen, metallischen Rohrstutzen fluchtet und daß der Transformatormantel des ungekapselt ausgeführten Netztransformators auf dem inneren Stutzenende so aufliegt, daß die Kernfensterebene senkrecht zum Ansaugluftstrom steht und das Kernfenster den lichten Durchgang des Rohrstutzens fortsetzt.

Durch die erfindungsgemäße Ausgestaltung fließt die gesamte durch die Ansaugöffnung strömende Luft durch das Kernfenster des Transformators. Dadurch wird eine sehr wirksame Kühlung des Transformators erzielt. Diese Kühlung wird noch dadurch unterstützt, daß der Transformator mit seinem Mantel auf dem dickwandig ausgebildeten metallischen Rohrstutzen aufliegt, so daß über den metallischen und daher gut wärmeleitenden Rohrstutzen eine wirksame direkte Wärmeableitung erfolgt. Hierbei ist von Bedeutung, daß der Rohrstutzen ebenfalls ständig durch die angesaugte Kühlluft gekühlt wird.

Zur weiteren Verbesserung der Transformatorkühlung ist neben dem der Lichtquelle und dem Bildfenster unmittelbar benachbarten Lüfter ein zusätzlicher Sauglüfter für den übrigen Bildwerferraum, insbesondere für den dort angeordneten Transformator, angebracht. Vorzugsweise ist daher ein Lüfterscheibenrad beiderseits mit Schaufeln versehen, so daß es zu einem in beiden Richtungen ansaugenden Zentrifugallüfter ergänzt ist. Die erwärmte Kühlluft beider Lüfterradhälften wird in einem gemeinsamen Radialstrom aus dem Bildwerfergehäuse herausgeblasen.

Auf der Zeichnung ist ein Ausführungsbeispiel schematisch dargestellt, und zwar zeigt

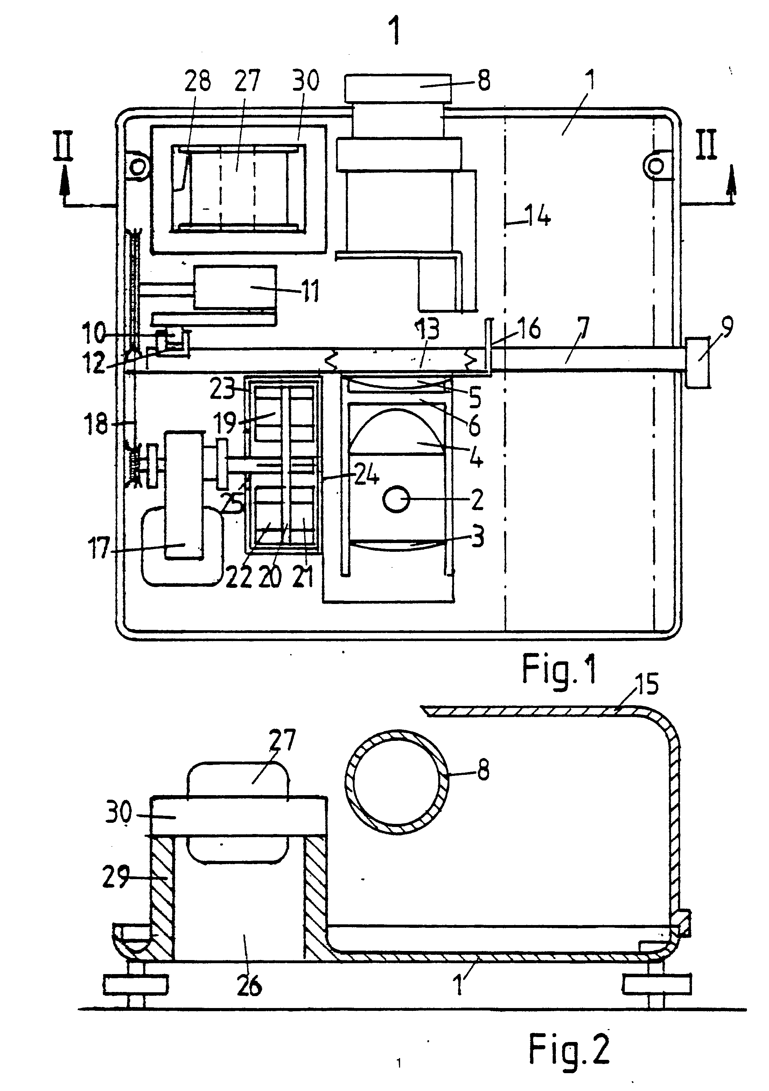

Fig. 1 einen Grundriß des Bildwerfers bei abgenommenem Gehäusedeckel, und

Fig. 2 einen Schnitt in Ebene II-II der Figur 1.

Auf der metallischen, schalenförmigen Grundplatte 1, die üblicherweise aus Leichtmetall-Spritz- oder -Druckguß besteht, sind sämtlichen optischen, elektrischen und mechanischen Teile des Bildwerfers montiert, wie das Beleuchtungssystem, bestehend aus der Lampe 2, dem Reflektor 3, den Kondensorlinsen 4 und 5 und dem Wärmeschutzfilter 6, ferner der Wechselschieber 7 und das Objektiv 8. Der Wechselschieber 7 kann üblicherweise mittels eines Handgriffs 9 betätigt werden oder durch den Zapfen 10 eines Kurbeltriebs 11, der jeweils eine volle Umdrehung ausführen kann und dabei den Wechselschieber 7 mittels der Führung 12 einmal hin und zurück bewegt und dabei das Dia aus dem Bildfenster 13 in das Magazin 14 überführt und das nächste Dia aus dem Magazin 14 in das Bildfenster 13 bringt. Dabei wird gleichzeitig das Magazin um eine Stufe weitergeschaltet. Die hierzu erforderlichen getrieblichen Einzelheiten sind allgemein bekannt und nicht gesondert dargestellt. Das Ganze ist durch einen abnehmbaren Gehäusedeckel 15 ver-

schlossen, welcher auch die Führung für das Magazin umschließen kann, oder der Deckel läßt die Magazinführung frei und verschließt nur den linken Geräteteil, so daß praktisch der Durchtrittschlitz für den Bildwechselschieber 7 gleichzeitig der Luftansaugeschlitz 16 ist.

Der Kurbeltrieb 11 wird von dem Antriebs-Motor 17 über einen Seiltrieb 18 angetrieben, welcher zugleich direkter Antriebsmotor 17 des Lüfterrades 19 ist. Das Lüfterrad 19 besteht aus einer runden Scheibe 20 mit beiderseitigen Schaufeln oder Radialplatten 21, 22, die von einem Gehäuse 23 mit axialen Öffnungen 24, 25 eingeschlossen sind, das in der oberen Hälfte offen ist, um den Abfluß der erwärmten Luft durch eine Öffnung des Deckels 15 zu ermöglichen. Die eine axiale Ansaugeöffnung 24 des Lüfters ist in unmittelbarer Nachbarschaft der Lichtquelle 2 angebracht, während die entgegengesetzte Öffnung 25 mit dem übrigen Gehäuseraum in Verbindung steht und die Luft durch eine Öffnung 26 in der Bodenplatte 1 ansaugt, hinter welcher der Netztransformator 27 mit seinem Kernfenster 28 quer zur Luftströmung, also parallel zur Bodenplatte 1 angeordnet ist. Dabei ist der Transformator 27 auf einem dickwandigen, die Ansaugeöffnung 26 umgebenden Rohrstutzen 29 befestigt. Die dicke Stutzenwandung ermöglicht einen vollen Flächenkontakt des Transformatoren-Mantels 30, so daß die von diesem entwickelte Wärme in wirksamer Weise abgeleitet wird. Dabei kann diese Wärmeableitung durch Anwendung von Wärmeleitpaste zwischen Transformatorenkern und Rohrstutzen 29 noch optimiert werden.

Zufolge dieser intensivierten Wärmeabfuhr vom Transformator kann dieser für eine erhöhte magnetische Flußdichte im Kern und erhöhte Stromdichte in der Wicklung ausgelegt werden, so daß sich beträchtlich kleinere Abmessungen des Trafokerns ergeben und trotzdem noch genügend freier Wickelraum im Trafofenster, um die freie Umströmung der Wicklung durch die Kühlluft zuzulassen.

**Patentansprüche**

1. Magazin-Stehbildwerfer mit einem eine metallische Bodenplatte (1) aufweisenden Gehäuse (1, 15) mit einer Ansaugöffnung (26), von der aus ein Kühllüfter (19-25) einen Ansaugluftstrom über eine Lichtquelle (2) und ein Bildfenster (13) erzeugt, und mit einem Netztransformator (27) mit einem Transformatormantel (30) und einem Kernfenster (28), dadurch gekennzeichnet, daß die Ansaugöffnung (26) mit einem dickwandigen, metallischen Rohrstutzen (29) fluchtet und daß der Transformatormantel (30) des ungekapselt ausgeführten Netztransformators (27) auf dem inneren Stutzenende so aufliegt, daß die Kernfensterebene senkrecht zum Ansaugluftstrom steht und das Kernfenster (28) den lichten Durchgang des Rohrstutzens (29) fortsetzt.

2. Magazin-Stehbildwerfer nach Anspruch 1, dadurch gekennzeichnet, daß der lichte Durchgang des Rohrstutzens (29) mit dem Kernfenster (28) und die Außenabmessungen des Rohrstutzens (29) mit denen des Transformatormantels (30) übereinstimmen.

3. Magazin-Stehbildwerfer nach Anspruch 1 oder 2, dadurch gekennzeichnet, daß neben dem der Lichtquelle (2) und dem Bildfenster (13) unmittelbar benachbart angeordneten Lüfter ein zusätzlicher Sauglüfter für den übrigen Gehäuseraum und den dort angeordneten Netztransformator (27) angeordnet ist.

4. Magazin-Stehbildwerfer nach Anspruch 3, dadurch gekennzeichnet, daß die beiden Lüfter durch beiderseitige Schaufeln (21, 22) auf einem gemeinsamen Lüfterscheibenrad (20) gebildet sind.

5. Magazin-Stehbildwerfer nach einem der Ansprüche 1 bis 4, dadurch gekennzeichnet, daß der metallische Rohrstutzen (29) Teil der metallischen Bodenplatte (1) ist.

**Claims**

1. Magazine projector with a housing (1, 15) having a metal base plate (1), with a suction opening (26) from which a cooling fan (19-25) draws an airstream over a light source (2) and a slide window (13), and with a mains transformer (27) with a transformer casing (30) and a core window (28), characterized in that the suction opening (26) registers with a thick-walled, metallic tubular support (29) and in that the transformer casing (30) of the unpotted mains transformer (27) so bears on the inner support end that the core window plane is perpendicular to the suction airstream and the core window (28) continues the clear passage of the tubular support (29).

2. Magazine projector according to claim 1, characterized in that the clear passage of the tubular support (29) conforms to the core window (28) and the outer dimensions of the tubular support (29) conform to those of the transformer casing (30).

3. Magazine projector according to claim 1 or 2, characterized in that, as well as the fan arranged directly adjacent the light source (2) and the slide window (13), there is arranged an additional fan for the other housing space and the mains transformer (27) arranged therein.

4. Magazine projector according to claim 3, characterized in that the two fans are formed by blades (21, 22) on the two sides of a common fan wheel (20).

5. Magazine projector according to any one of claims 1 to 4, characterized in that the metal tubular support (29) is part of the metal base plate (1).

**Revendications**

1. Projecteur d'images fixes à magasin comportant un boîtier (1, 15) présentant une plaque de fond métallique (1) munie d'une ouverture d'aspiration (26) à partir de laquelle un ventilateur de refroidissement (19-25) produit un courant d'air aspiré dirigé sur une source lumineuse (2) et une fenêtre de cadrage (13), et un transformateur d'alimentation (27) comportant une enveloppe (30) du transformateur et une fenêtre de noyau (28), caractérisé en ce que l'ouverture d'aspiration (26) est dans l'alignement d'une tubulure métallique (29) à paroi épaisse, et en ce que l'enveloppe (30) du transformateur d'alimentation (27) du type non encapsulé est posée sur l'extrémité intérieure de la tubulure de telle façon que le plan de la fenêtre de noyau (28) est perpendiculaire au courant d'air aspiré et que la fenêtre (28) du noyau prolonge le passage libre de la tubulure (29).

2. Projecteur d'images fixes à magasin conforme à la revendication 1, caractérisé en ce que le passage libre de la tubulure (29) correspond à la fenêtre (28) du noyau et les dimensions extérieures de la tubulure (29) correspondent à celles de l'enveloppe (30) du transformateur.

3. Projecteur d'images fixes à magasin conforme à l'une des revendications 1 ou 2, caractérisé en ce que, en plus du ventilateur disposé au voisinage direct de la source lumineuse (2) et de la fenêtre de cadrage (13), il existe un exhausteur supplémentaire pour le reste du volume du boîtier et pour le transformateur d'alimentation (27) qui y est installé.

4. Projecteur d'images fixes à magasin conforme à la revendication 3, caractérisé en ce que les deux ventilateurs sont constitués de palettes (21, 22) disposées sur une roue pleine commune (20) de part et d'autre de celle-ci.

5. Projecteur d'images fixes à magasin conforme à l'une des revendications 1 à 4, caractérisé en ce que la tubulure métallique (29) fait partie intégrante de la plaque de base (1).

Fig.1

Fig.2